Europäisches Patentamt

European Patent Office

Office européen des brevets

(19)

(11) Publication number: **0 052 498**
**B1**

# EUROPEAN PATENT SPECIFICATION

(12)

(45) Date of publication of patent specification: **08.06.88**

(21) Application number: **81305402.0**

(22) Date of filing: **16.11.81**

(51) Int. Cl.⁴: **G 01 G 19/32,** G 01 G 13/18,
G 01 G 13/24, G 01 G 23/365,
G 01 G 23/37

(54) **Combinatorial weighing system.**

(30) Priority: **18.11.80 JP 162983/80**
**12.01.81 JP 3354/81**
**27.01.81 JP 11318/81**
**27.06.81 JP 100088/81**

(43) Date of publication of application:
**26.05.82 Bulletin 82/21**

(45) Publication of the grant of the patent:
**08.06.88 Bulletin 88/23**

(84) Designated Contracting States:
**AT BE CH DE FR GB IT LI LU NL SE**

(56) References cited:
**US-A-3 939 928**

(73) Proprietor: **KABUSHIKI KAISHA ISHIDA KOKI
SEISAKUSHO
44, Syogoinsanno-cho Sakyo-ku
Kyoto-shi Kyoto 606 (JP)**

(72) Inventor: **Minamida, Kazukiyo**
**c/o 44, Syogoinsanno-cho**
**Sakyo-ku Kyoto-shi Kyoto 606 (JP)**
Inventor: **Asai, Yoshiharu**
**c/o 44, Syogoinsanno-cho**
**Sakyo-ku Kyoto-shi Kyoto 606 (JP)**
Inventor: **Kakita, Yokio**
**c/o 44, Syogoinsanno-cho**
**Sakyo-ku Kyoto-shi Kyoto 606 (JP)**
Inventor: **Mikami, Yoshiharu**
**c/o 44, Syogoinsanno-cho**
**Sakyo-ku Kyoto-shi Kyoto 606 (JP)**
Inventor: **Konishi, Satoshi**
**c/o 44, Syogoinsanno-cho**
**Sakyo-ku Kyoto-shi Kyoto 606 (JP)**

(74) Representative: **Freed, Arthur Woolf**
**Reginald W. Barker & Co. 13 Charterhouse
Square
London EC1M 6BA (GB)**

EP 0 052 498 B1

Courier Press, Leamington Spa, England.

## Description

The present invention relates to a combinatorial weighing system and more particularly to a method and apparatus for collecting articles weighed out in such a combinatorial weighing system.

A combinatorial weighing system comprising a plurality of weighing sections, computes combinations on the basis of weight values indicated by the weighing sections, searches for a particular combination whose addition value is equal or closest to a set value (weight or number of articles) and decides it as a combination for discharge.

The combinatorial weighing and collection of articles weighed out in this type of combinatorial weighing system are performed, for example, in the following manner: Groups of articles fed into a plurality of weighing hoppers are weighed by weighing machines associated with the weighing hoppers, addition values are computed of any desired number of combinations or all possible combinations of the weight values thus obtained the addition values are individually compared with a set weight to find a particular combination whose addition value is equal or closest to the set weight, and articles are discharged from the corresponding hoppers into a discharge chute and then collected in a timing hopper. There is another arrangement wherein weight values indicated by the weighing machines are each divided by the single-article weight to convert each value into the number of articles, addition is performed on each of the combinations of these numbers to find a particular addition value equal or closest to a set number and articles are discharged and collected.

In each case very accurate computations can be performed but recently there has been a requirement for improved weighing capability. In order to improve weighing capability, however, it is important to increase the feed rate, weighing rate and discharge rate of articles and to efficiently collect articles discharged in each weighing operation.

US—A—3 939 928 discloses a combinatorial weighing system having a plurality of weighing hoppers with a plurality of weighing machines respectively associated with the weighing hoppers for weighing articles received in the weighing hoppers. An arithmetic section performs combinatorial operation on the basis of weighed data from the weighing machines and sends discharge signals to the weighing hoppers. A collecting chute collects articles discharged from the weighing hoppers and discharges them through a discharge port.

Of these three rates, it is possible to increase the weighing and discharge rates, but what matters most is the rate of collection of articles. More particularly, collection of articles, which are selected by combinatorial operation and discharged, at, e.g., twice the conventional rate of collection is attended with a difficulty that because of the distance between respective weighing hoppers and the timing hopper, articles discharged the last time mix with those discharged this time. Further, if the number of weighing machines is increased to increase the weighing accuracy, the chute must be correspondingly increased in size and the distance referred to above becomes longer. As a result, articles discharged in two successive operations mix with each other or articles fall at a greater speed and collide against articles at the discharge port of the collecting chute, with possible damage to these articles.

As for the weighing and discharge rates, in the conventional weighing (or counting) system, when a particular combination for discharge is obtained from the results of combinatorial operation and articles are discharged no weight data necessary for combinatorial operation are obtained from the weighing machines from which articles have been discharged and which are now empty, so that the computing function remains stopped until these weighing machines are newly fed with articles. That is, it has been impossible to reduce the article discharge interval in the conventional system to below the interval corresponding to the time required for weighing machines to discharge articles and then receive fresh articles and deliver weight data plus the time required for combinatorial operation. When the mechanism of the conventional system is investigated it is seen that the weighing machines which have discharged articles cannot participate in combinatorial operation until they are newly fed with articles but that the remaining machines are delivering weight data. This means that if the next discharge combination is obtained by performing combinatorial operation by using the weight data from the remaining weighing machines, the article discharge interval can be shortened and weighing or counting speed can be doubled.

An object of the invention is to provide an improved combinatorial weighing system.

According to one aspect of the present invention, there is provided a combinatorial weighing system comprising a plurality of weighing machines for weighing articles, and arithmetic section for performing combinatorial operation on the basis of weighed data from said weighing machines, and sending discharge signals to the weighing machines, a collecting chute for collecting articles discharged from said weighing machines and discharging them through a discharge port, characterised by a shutter which is located within the collection chute above its discharge port and controls discharge of articles through the discharge port, and a drive unit for opening an closing said shutter.

Preferably, a weighing hopper is associated with each weighing machine which weighs the articles received in the weighing hopper, the discharge signals being applied to the weighing hopper.

Preferably, there is provided a timing hopper situated under the discharge port for receiving articles dropped therethrough and the drive unit is responsive to a signal from the timing hopper.

Even if the weighing and discharge rate of articles are increased, e.g., twofold, the presence of the shutter separates articles discharged the last time from those to be discharged this time so as to collect them in the timing hopper, thus preventing mixing of articles and improving the weighing capability and collecting operation. The distance from the intermediate shutter to the lower timing hopper may be approximately half the distance from the weighing hoppers to the timing hopper, so that the falling speed of discharged articles is low and there is no danger of articles colliding against each other at the discharge port of the collecting chute; this leads to prevention of damage to articles. Further, the invention can be applied to a large-sized collecting chute and improved weighing accuracy can be easily attained by increasing the number of weighing machines, which is allowed by the use of such large-sized collecting chute. Thus, the invention is very useful.

According to another aspect of the invention, there is provided a combinatorial weighing method comprising the steps of weighing groups of articles by means of a plurality of weighing machines, computing combinations of weight values, and causing the weighing machines to discharge articles towards a collecting chute having a discharge port, characterised in that a shutter located, within the collecting chute above the discharge port of said collecting chute, is positioned in a closed position during a first time period to stop and collect said articles and is positioned in an open position during a second time period to discharge said collected articles towards said discharge port.

Embodiments of the present invention will now be described with reference to the accompanying drawings, in which:—

Fig. 1 is a schematic elevational sectional view of an embodiment of a article collecting apparatus in a combinatorial weighing system according to the invention;

Fig. 2 is an enlarged view of a portion of the apparatus shown in Fig. 1;

Figs. 3 and 4 are time charts each showing an operation timing for the apparatus of Fig. 1;

Fig. 5 is a block diagram of a combinatorial weighing system according to the present invention; and

Fig. 6 is a flowchart showing operating procedures in the system of Fig. 5.

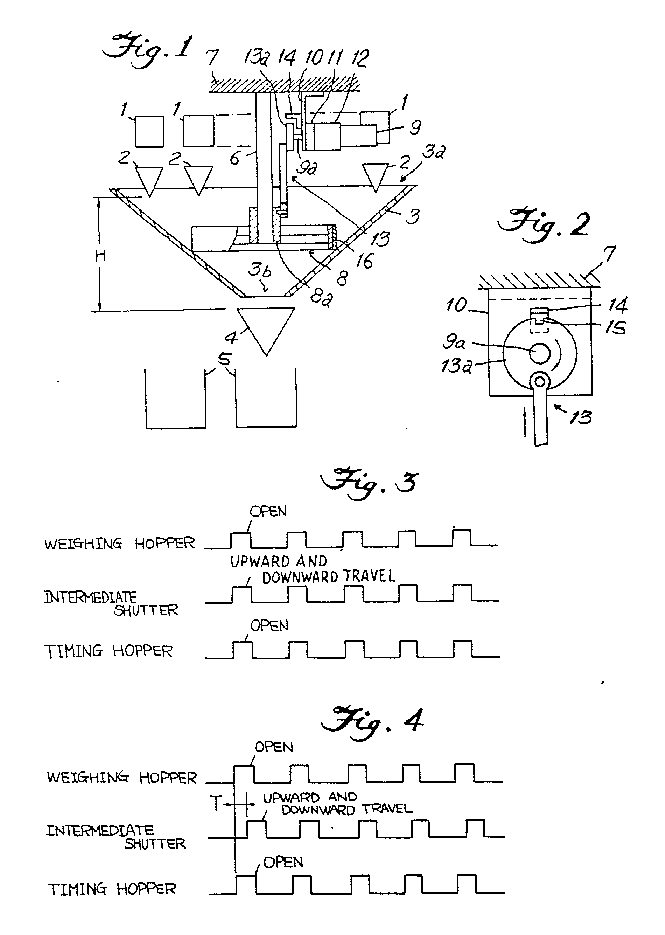

In Fig. 1, the numeral 1 denotes weighing machines; 2 denotes weighing hoppers respectively associated with the weighing machines 1; 3 denotes a collecting chute; 4 denotes a timing hopper; and 5 denotes buckets operatively connected to a packaging machine or the like. There are provided article feeders (not shown) respectively associated with the weighing hoppers 2. It is possible to use feeders of the known type designed such that when the associated weighing hoppers have discharged articles and become empty, the feeders are each started to feed a single article or a set number of articles or a set weight of articles to the associated weighing hoppers and then stop.

The numeral 6 denotes a mainshaft disposed centrally above the inlet port 3a of the collecting chute 3 and suspended from the lower surface of a frame 7; and 8 denotes an intermediate shutter vertically movably installed on the lower end of the main shaft 6. The numeral 9 denotes a motor which, through a speed reducer 11 and a clutch brake 12, is attached to a bracket 10 suspended from the frame 7 at a predetermined position; and 13 denotes a crank mechanism interposed between the main shaft 9a of the motor and the boss 8a of the intermediate shutter 8. The numeral 14 denotes a sensor, e.g., a photocell, disposed at a predetermined position on one side of the bracket 10 and adapted to accurately stop the rotation of the motor 9 by sensing the light passing through a notch 15 formed in the cam 13a of the crank mechanism 13, as best seen in Fig. 2.

The intermediate shutter 8 comprises an elastic buffer member 16, e.g., "bancoran" (hardness of about 70), bonded to the vertical (i.e., cylindrical) outer peripheral surface and is positioned about half the distance, the so-called "head" H, between the weighing hoppers 2 and the timing hopper 4, so that it contacts the inner peripheral surface of the collecting chute 3. In addition, the intermediate shutter 8 may be of any desired shape, e.g., circular or polygonal, corresponding to the shape of the collecting chute 3. Further, the outer peripheral surface may be oblique (i.e., conical) instead of vertical as shown. The operation timing for the intermediate shutter 8 is controlled by signals from the timing hopper 4.

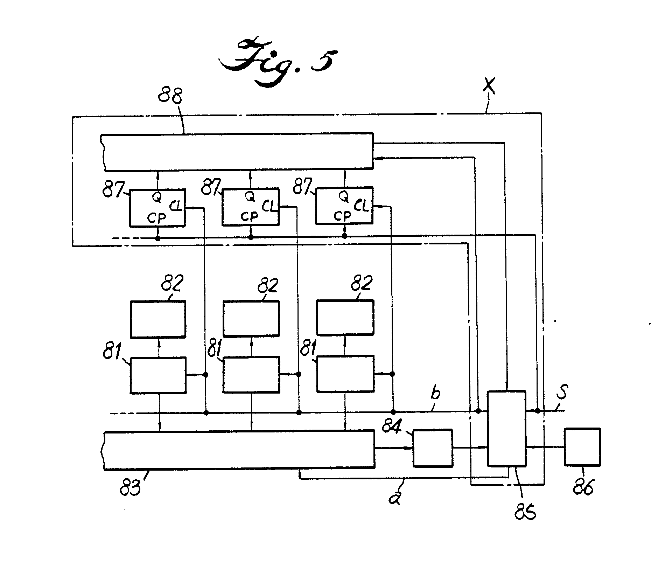

The manner of collecting articles in the apparatus described above will now be described with reference to the timing charts shown in Figs. 3 and 4.

At the start of operation according to these time charts, it is assumed that the weighing hoppers 2, the intermediate shutter 8 in the collecting chute 3 and the timing hopper 4 have been closed, that each weighing hopper 2 has been fed with articles, and that articles according to optimum combinations have been fed to the intermediate shutter and the timing hopper, respectively.

In cases where articles with low friction, such as wrapped candy, are to be collected at twice the usual speed in order to increase the weighing capability, articles which have been fed to the weighing hoppers 2 are weighed by the weighing machines 1, addition is performed on the respective combinations of the indicated weight values, and a particular combination whose addition value is equal or closest to a set weight is selected, whereupon the weighing hoppers 2 corresponding to the optimum combination are opened to discharge articles to the collecting chute 3. At this time, as can be seen in Fig. 3, the timing hopper 4 is opened simultaneously with the weighing hoppers 2 to discharge articles contained therein into the bucket 5 located below. A signal is sent from the timing hopper 4 to the intermediate shutter 8, so that the intermediate shutter 8 is raised through the crank mechanism 13 by the driving of the motor 9 to allow the articles fed at the 1/2 H position to be collected in one place therebelow, i.e., the timing hopper 4. In this case, the time required for the intermidiate shutter 6 to make one upward and downward travel is set such that it completes its travel before the articles discharged from each weighing hopper 2 reach the 1/2 H position. Further, it is so arranged that the closing of the weighing hoppers 2 and timing hopper 4 is effected immediately after the discharge of articles.

Thus, as soon as the weighing hoppers 2 are opened, they discharge articles along the inner surface of the collecting chute 3, and the presence of the intermediate shutter 8 positioned at 1/2 H allows the articles to strike the elastic buffer member 16 bonded to the outer peripheral surface thereof for shock absorption. Since the time required for the intermediate shutter 8 to make one upward and downward travel is set such that it completes its travel before articles discharged from weighing hoppers 2 reach the intermediate shutter 8 positioned at half the head H, as described above, the intermediate shutter 8 intercepts the articles discharged from weighing hoppers 2 at the 1/2 H position in the collecting chute 3.

The articles intercepted at the 1/2 H position are allowed to descend along the inner surface of the collecting chute 3 at the same time as the intermediate shutter 8 is raised, the articles being discharged into the timing hopper 4 through the discharge port 3b. As a result, even if the articles are discharged at high-speed from the weighing hoppers 2, the presence of the intermediate shutter 8 in the collecting chute 3 ensures that groups of articles are completely separated at each cycle and successively collected in the timing hopper 4. Further, since the intermediate shutter 8 has its outer peripheral surface shaped vertical (i.e., cylindrical), articles fed simultaneously with its upward movement can be discharged downwardly and when it lowers it will accurately stop at the predetermined positon as soon as the photocell 14 disposed at the pre-determined position on the bracket 10 receives light. Further, since the head of articles discharged by the upward travel of the intermediate shutter 8 is equal to half the distance to the timing hopper 4, i.e., 1/2 H, the falling speed thereof is low, preventing the articles from crashing against each other at the discharge port 3b of the collecting chute 3.

The timing hopper 4 discharges articles into the bucket 5 therebelow as soon as it is opened, and immediately after discharge, it is closed to be ready to collect articles to be discharged at the next cycle. By discharging articles from the weighing hoppers 2 in the manner described, it is possible to perform continuous article collecting operation.

The time chart of Fig. 4 illustrates an operation timing for collecting articles with high friction, such as macaroni. In the case of collecting articles with high friction, since the time taken for articles to fall from the weighing hoppers 2 to the timing hopper 4 via the collecting chute 3 is greater than that required for articles with low friction described with reference to Fig. 3, the upward travel of the intermediate shutter 8 must be arranged to correspond to the falling speed of articles. Thus, when the weighing hoppers corresponding to a selected optimum combination are opened to discharge articles, the timing hopper 4 is sumultaneously opened as in the case of Fig. 3 so that the articles contained therein are discharged into the bucket 5 therebelow while the above-described signal from the timing hopper 4 is sent to the intermediate shutter 8 with a lag corresponding to a timer time T to cause the intermediate shutter 8 to travel upward so as to discharge articles into the timing hopper 4. In addition, it goes without saying that the intermediate shutter 8 is set such that it completes one upward and downward travel before the articles discharged from the weighing hoppers 2 reach the 1/2 H position in the collecting chute 3.

In the embodiment described above, even in the case of articles easy to discharge, it is expected to be impossible to discharge them more than 100 times/min. More particularly, let the overall capability for combinatorial computation, selection and discharge using the weighing hoppers 2 be n times/min. Then, the intermediate shutter has to operate at n times/min. However, because of its arrangement it is impossible for the intermediate shutter to operate 100 times/min or more, limiting the weighing capability of the weighing hoppers 2.

An embodiment intended to reduce the weighing-discharge time in a combinatorial weighing system according to the invention will now be described.

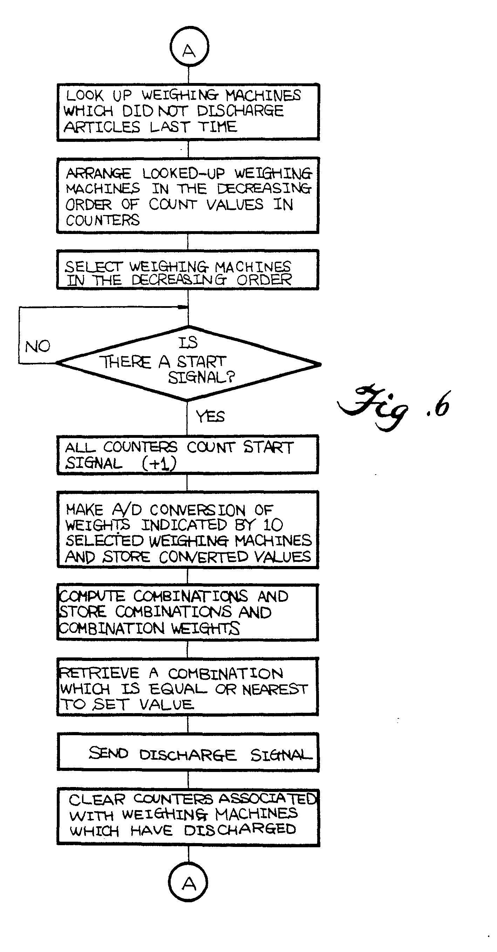

In Fig. 5, the numeral 81 denotes a plurality (e.g., fifteen) of weighing machines; 82 denotes a plurality of feeders for feeding articles to the weighing machines 81; 83 denotes a multiplexer composed, e.g., of analog switches adapted to selectively pass weight data from the weighing machines 81 in response to control signals from an arithmetic unit to be later described; 84 denotes an A/D converter for converting analog weight data delivered from the multiplexer 83 into digital values; 85 denotes an arithmetic unit adapted to deliver control signals $a$ to the multiplexer 83, perform combinatorial computations according to a predetermined procedure to obtain a particular combination whose additive value is equal or the nearest to a set value, and deliver discharge signals $b$ to the weighing machines 81 corresponding to the selected combination, causing these weighing machines to discharge their articles; 86 denotes a weight setting section for setting a weight value for discharge; 87 denotes a plurality of counters respectively associated with the weighing machines for counting the number of times when the associated weighing machine 81 did not discharge; and 88 denotes a selecting section which compares count values corresponding to weighing machines 81 into which discharge signals b were not inputted and selects a fixed number of weighing machines in the decreasing order of count values. The portion X surrounded with an alternate long and short dash line is the control section of this apparatus, composed of hardware circuits using IC's or of a microcomputer.

The operation of this apparatus is performed according to the procedures shown in Fig. 6.

First, a weight value for articles to be combinatorially weighed and discharged is set by the weight setting section 86. The feeders 82 feed articles to the weighing machines 81 with suitable variations in amount. The amount to be fed is determined such that the total weight of articles in several (e.g., four or so) weighing machines is equal to the set value. When articles are fed, the arithmetic section 85 causes the selecting section 88 to look up the weighing machines which did not discharge last time and to arrange the count values in the counters 87 corresponding to the looked-up weighing machines in the decreasing order. A fixed number (e.g. ten) of weighing machines in the decreasing order of count values are selected therefrom. In addition, immediately after the start of operation, discharge signals b have not been delivered from the arithmetic section 85 and no distinction can be made between count values in the counters 87 since they are all zero because of initial setting. The order of selection in such case may be determined, e.g., by numbering the weighing machines and selecting them in the increasing order of numbers. This method of selection is also applicable where like count values are included in selecting count values in the decreasing order when the weighing operation is going on. Since count values are for the purpose of recording the number of times when weighing machines did not discharge, the selection of weighing machines in the decreasing order of count values serve to equalize the frequencies of operation of all weighing machines so that the latter have substantially the same life. As for the order of selection of weighing machines having the same count value, there are other methods than the one numbering the weighing machines described above. For example, it is possible to select weighing machines at random by producing random numbers in the arithmetic section 85. Upon completion of the selection of weighing machines in this manner, a check is made of whether or not there is a start signal S from the packaging machine requiring a supply of articles. If there is no such signal, the check is repeated. When there is a start signal S, all counters 87 count it and their count values each increase by one. Judging that there is a start signal, the arithmetic section 85 allows the outputs from ten weighing machines 81 selected to successively pass by sending selection signals a to the multiplexer 83, the outputs being converted into digital values by the A/D converter 84 and stored in the arithmetic section 85. Combinations of the weight data on the ten selected weighing machines are computed, and the resulting combination weights and combinations are stored. A particular combination whose combination weight is equal or the nearest to the set value is retrieved. When the combination for discharge to the packaging machine is determined upon completion of the retrieval, discharge signals b are sent to the corresponding weighing machines to discharge their articles. These discharge signals b are also sent to the counters 87 corresponding to the weighing machines 81 which are to discharge their articles, thereby clearing their count values to zero.

During discharge from these weighing machines 81, the control section X restarts to execute the program from the operating procedure Ⓐ. first, it looks up the weighing machines which did not discharge their articles last time. This is done by causing the selecting section 88 to check on the weighing machines 81 to which discharge signals b were not sent. The count values in the counters 87 corresponding to the looked-up weighing machines 81 are arranged in the decreasing order. Ten weighing machines 81 are selected in the decreasing order of count values. In this case, if six of the total of fifteen weighing machines are discharging their articles, the number of weighing machines which can take part in combinatorial weighing is nine; only these nine weighing machines will be selected. The control section then assumes its stand-by position checking whether or not there is a start signal S. If there is a start signal S, it computes combinations in the same manner as before and retrieves a particular combination equal or the nearest to the set weight for discharging articles, whereupon it returns to the position of the operating procedure Ⓐ. It looks up the weighing machines which did not discharge their articles. In this case, the weighing machines which discharged their articles last time but one have already been fed with articles. Therefore, the weighing machines except those which discharged their articles last time are looked up.

Thereafter, such operation is repeated, whereby combinations can be computed to find a particular combination for discharge next time during the discharge of articles from weighing machines and during the feeding of fresh articles to weighing machines, so that weighing and discharge can be done at double the conventional speed.

In the above embodiment, the selection of a fixed number (e.g., ten) of weighing machines from those which did not discharge their articles has been made by comparing the count values in the counters 87 and selecting them in the decreasing order. However, it is possible to select a fixed number of weighing machines without such conditions. In that case, weighing machines may be selected in the increasing order of numbers assigned thereto, and there is no need to provide the counters 87.

Incidentally, when it is desired to find a particular combination those addition value is equal or nearest to a set value by means of combinatorial computations, a large number of weight data are required in order to obtain sufficient accuracy. For example, if the number of weighing machines participating in combinatorial computations is ten, the number of all possible combinations is $2^{10} - 1 = 1023$, which may be said to be a sufficiently large number. On the other hand, if the number of weighing machines participating in combinatorial computation is five, the number of all possible combinations is $2^5 - 1 = 31$, with which it would be impossible to obtain a particular combination weight or number which is sufficiently near to a set value.

Therefore, in this invention, a sufficient number of weighing machines to provide sufficient accuracy plus some weighing machines the number of which is approximately equal to or greater than the number of weighing machines expected to discharge their articles in a single operation are used and combinations are computed on the basis of weight data obtained from these weighing machines, so that even if some weighing machines become empty due to the discharge of their articles, the remaining weighing machines allow combinatorial computations while ensuring sufficient accuracy. If the number of weighing machines participating in combinatorial computations is ten, the number of all possible combinations which are to be computed is $2^{10} - 1 = 1023$, but if fifteen weighing machiens participate in combinatorial computations, it is necessary to compute $2^{15} - 1 = 32,767$ combinations, greatly increasing the computing time required, so that the efficiency is decreased. Therefore, in this invention, the number of weighing machines participating in combinatorial computations in a single operation is limited to a fixed value, e.g., ten, so as to avoid such drawback.

The method of computing combinations in this invention is not limited to the one described herein merely by way of explanation. For example, rather than storing all combination weights which are the results of combinatorial computations, each time the computation of a combination is completed, it is compared with the set weight and only that one of the combinations computed so far which is the nearest to the set weight is stored, so that when all combinations have been computed, a particular combination which is equal or the nearest to the set weight will have been found.

The description so far has been given with reference to combinatorial weighing taken as an example, but the present invention may, of course, be likewise applied to combinatorial counting. More particularly, the invention may be embodied by weighing groups of articles, dividing the weight of each group by the weight of a single article to find the number of articles in each group, performing addition on each combination of the numbers to find a combination equal or closest to a set number, and discharging the articles corresponding to that combination. Therefore in the present invention, the term "combinatorial weighing" includes the meaning of "combinatorial counting". Combinatorial operation for the latter case may be performed by any desired method. Further, conditions for a set value for dischage may be set as desired, such as number alone or number plus weight.

**Claims**

1. A combinatorial weighing system comprising a plurality of weighng machines (1) for weighing articles, an arithmetic section for performing cobinatorial operation on the basis of weighed data from said weighing machines (1), and sending discharge signals to the weighing machines (1), a collecting chute (3) for collecting articles discharged from said weighing machines (1) and discharging them through a discharge port (36), characterised by a shutter (8) which is located within the collection chute (3) above its discharge port (36) and controls discharge of articles through the discharge port (36), and a drive unit (9) for opening and closing said shutter.

2. A combinatorial weighing system as claimed in claim 1, characterised in that a weighing hopper (2) is associated with each weighing machine (1) which weighs the articles received in the weighing hopper (2), the discharge signals being applied to the weighing hoppers (2).

3. A combinatorial weighing system as claimed in claim 1 or claim 2 characterised by a timing hopper (4) situated under the discharge port (36) for receiving articles dropped therethrough, and in that the drive unit (9) is responsive to a signal from the timing hopper (4).

4. A system as claimed in any of claims 1 to 3, characterised in that the timing for operation of said shutter is adjustable.

5. A combinatorial weighing method comprising the steps of weighing groups of articles by means of a plurality of weighing machines (1), computing combinations of weight values, and causing the weighing machines (1) to discharge articles towards a collecting chute (3) having a discharge port (36) characterized in that a shutter (8) located, within the collecting chute (3) above the discharge port (36) of said collecting chute (3), is positioned in a closed position during a first time period to stop and collect said articles and is positioned in an open position during a second time period to discharge said collected articles toward said discharge port (36).

6. A method as claimed in claim 5, characterised in that said step of positioning said shutter (8) in an open position during a second time period is carried out coincidentally with said step of discharging articles from said weighing machines (1) so that articles are released from said shutter (8) towards said disharge port (36) at the same time that articles are travelling toward said shutter (36); and said step of positioning said shutter (8) in a closed position during a first time interval is carried out prior to the arrival at said shutter (8) position of articles discharged from said weighing machines (1).

7. A method as claimed in claim 5, characterised in that said step of positioning said shutter (8) in an open position during a second time period is carried out at a time delayed a predetermined amount from the step of discharging articles from said weighing machines (1) so that articles are released from said shutter (8) toward said discharge port (36) after the next batch of articles have started travelling towards said shutter (8); and said step of positioning said shutter (8) in a closed position during a first time interval is carried out prior to arrival at said shutter position of articles discharged from said weighing machines (1).

**Patentansprüche**

1. Kombinatorisches Wiegesystem mit einer Mehrzahl von Wiegamaschinen (1) zum Wiegen von Artikeln, mit einem arithmetischen Abschnitt zur Durchführung von kombinatorischen Operationen auf der Basis von Wiegedaten von den Wiegemaschinen (1), der Entleerungssignale zu den Wiegemaschinen (1) sendet, mit einer Auffangrutsche (3) zum Auffangen von aus den Wiegemaschinen (1) ausgeleerten Artikeln und zu deren Entleerung durch eine Auslaßöffnung (3b), gekennzeichnet durch einen Verschluß (8), der innerhalb der Auffangrutsche (3) oberhalb der Auslaßöffnung (3b) angeordnet ist und das Entleeren von Artikeln durch die Auslaßöffnung (3b) steuert, und durch eine Antriebseinheit (9) zum Öffnen und Schließen des Verschlusses.

2. Kombinatorisches Wiegesystem nach Anspruch 1, dadurch gekennzeichnet, daß ein Wiegetrichter (2) jeder Wiegemaschine (1) zugeordnet ist, der die in den Wiegetrichtern (2) enthaltenen Artikel wiegt, wobei Entleerungssignale an die Wiegetrichter (2) gegeben werden.

3. Kombinatorisches Wiegesystem nach Anspruch 1 oder 2, gekennzeichnet durch einen Abgabetrichter (4), der unter der Auslaßöffnung (3b) zur Aufnahme von Artikeln angeordnet ist, die dorthin durchfallen, und dadurch, daß die Antriebseinheit (9) abhängt von einem Signal von dem Ausgabetrichter (4).

4. Wiegesystem nach einem der Ansprüche 1 bis 3, dadurch gekennzeichnet, daß der Zeitpunkt für die Betätigung des Verschlusses einstellbar ist.

5. Kombinatorisches Wiegeverfahren mit den Schritten des Wiegens von Artikelgruppen mit Hilfe einer Vielzahl von Wiegemaschinen (1), Berechnen von Kombinationen von Gewichtswerten und Veranlassen der Wiegemaschinen zum Entleeren der Artikel auf eine Auffangrutsche (3) mit einer Auslaßöffnung (3b), dadurch gekennzeichnet, daß ein Verschluß (8) innerhalb der Auffangrutsche (3) oberhalb der Auslaßöffnung (3b) der Auffangrutsche (3) angeordnet ist, der in einer geschlossenen Position während einer ersten Zeitperiode positioniert ist, um die Artikel anzuhalten und anzusammeln, und in einer offenen Position während einer zweiten Periode positioniert ist, um die angesammelten Artikel auf die Auslaßöffnung (3b) zu entleeren.

6. Verfahren nach Anspruch 5, dadurch gekennzeichnet, daß der Schritt des Überführens des Verschlusses (8) in einer offene Position während einer zweiten Zeitperiode gleichzeitig mit dem Schritt des Entleerens von Artikeln von den Verschluß (8) in Richtung auf die Auslaßöffnung (3b) zu derselben Zeit freigelassen werden, zu der die Artikel in Richtung auf den Verschluß (8) unterwegs sind; und daß der Schritt des Überführens des Verschlusses (8) in eine geschlossene Position während eines ersten Zeitintervalles eher ausgeführt wird als die Ankunft von Artikeln an der Position des Verschlusses (8), die aus den Wiegemaschinen (1) entleert werden.

7. Verfahren nach Anspruch 5, dadurch gekennzeichnet, daß der Schritt des Überführens des Verschlusses (8) in eine offene Position während einer zweiten Zeitperiode nach einer Zeitverzögerung um einen vorgegebenen Betrag gerechnet vom Schritt des Entleerens von Artikeln aus den Wiegemaschinen (1) durchgeführt wird, so daß Artikel von dem Verschluß (8) in Richtung auf die Auslaßöffnung (3b) freigegeben werden, nachdem die nächste Charge von Artikeln begonnen hat, in Richtung auf den Verschluß (8) zu wandern; und daß der Schritt des Überführens des Verschlusses (8) in eine geschlossene Position während eines ersten Zeitintervalles vor der Ankunft von Artikeln an der Position des Verschlusses durchgeführt wird, die aus den Wiegemaschinen (1) entleert werden.

**Revendications**

1. Système de pesée combinateur comprenant une pluralité de balances (1) pour peser des articles, une section arithmétique pour effectuer des opérations combinatoires sur la base des données de pesées provenant desdites balances (1), et pour envoyer des signaux de déchargement aux balances (1), une trémie de rassemblement (3) pour recueillir les articles· déchargés desdites balances (1) et pour les décharger à travers une ouverture de déchargement (3b), caractérisé par un obturateur (8) qui est disposé à l'intérieure de la trémie de rassemblement (3) audessus de son ouverture de déchargement (3b) et qui commande le déchargement des articles à travers l'ouverture de déchargement (3b), et une unité d'entraînement (9) pour ouvrir et fermer ledit obturateur.

2. Système de pesée combinateur selon la revendication 1 caractérisé en ce que une trémie de pesée (2) est associée à chaque balance (1) qui pèse les articles reçus dans la trémie de pesée (2), les signaux de déchargement étant appliqués aux trémies de pesée (2).

3. Système de pesée combinateur selon la revendication 1 ou 2, caractérisé par une trémie de temporisation (4) disposée sous l'ouverture de déchargement (3b) pour recevoir les articles tombant à travers cette dernière, l'unité d'entraînement (9) étant sensible à un signal provenant de la trémie de temporisation (4).

4. Système de pesée combinateur selon l'une des revendications de 1 à 3, caractérisé en ce que la temporisation réalisée par le fonctionnement dudit obturateur est réglable.

5. Procédé de pesée combinateur comprenant les operations de peser un ensemble d'articles au moyen d'une pluralité de balances (1), de calculer des combinaisons des valeurs des poids, et d'obliger les balances à décharger des articles à destination de la trémie de rassemblement (3) ayant une ouverture de déchargement (3b), caractérisé en ce que l'obturateur (8) disposé à l'intérieur de la trémie de rassemblement (3) au-dessus de l'ouverture de déchargement (3b) de ladite trémie de rassemblement (3) est placée à une position de fermeture pendant une première période de temps, pour arrêter et rassembler lesdits articles et elle est placée à une position d'ouverture pendant une seconde période de temps pour décharger lesdits articles rassemblés par ladite ouverture de déchargement (3b).

6. Procédé selon la revendication 5 caractérisé en ce que ladite, opération de positionnement dudit obturateur (8) à une position d'ouverture pendant une seconde période de temps est effectuée simultanément à ladite opération de déchargement des articles à partir desdites balances (1), de sorte que les articles sont laissés libres par ledit obturateur (8) en direction de ladite ouverture de déchargement (3b) quand ces articles se déplacent par rapport audit obturateur (8); et ladite opération de positionnement dudit obturateur (8) à une position de fermeture pendant une première période de temps est effectuée avant l'arrivée à ladite position de l'obturateur (8) des articles déchargés à partir des balances (1).

7. Procédé selon la revendication 5 caractérisé en ce que ladite étape de postionnement dudit obturateur (8) à une position d'ouverture pendant une seconde période de temps, est effectuée à un moment retardé d'une valeur prédéterminée par rapport à l'opération de déchargement d'articles à partir des balances (1), de sorte que ces articles sont libérés par ledit obturateur (8) en direction de l'ouverture de déchargement (3b) aprés que le lot suivant d'articles a commencé à se déplacer vers ledit obturateur (8); et ladite opérateur de positionnement dudit obturation (8) à une position de fermeture pendant une première période de temps est effectuée avant l'arrivée à ladite position de l'obturateur des articles déchargés à partir des balances (1).

*Fig. 1*

*Fig. 2*

*Fig. 3*

OPEN

WEIGHING HOPPER

UPWARD AND
DOWNWARD TRAVEL

INTERMEDIATE
SHUTTER

OPEN

TIMING HOPPER

*Fig. 4*

OPEN

WEIGHING HOPPER

T

UPWARD AND
DOWNWARD TRAVEL

INTERMEDIATE
SHUTTER

OPEN

TIMING HOPPER

1

*Fig. 5*

0 052 498

A

LOOK UP WEIGHING MACHINES
WHICH DID NOT DISCHARGE
ARTICLES LAST TIME

ARRANGE LOOKED-UP WEIGHING
MACHINES IN THE DECREASING
ORDER OF COUNT VALUES IN
COUNTERS

SELECT WEIGHING MACHINES
IN THE DECREASING ORDER

NO ← IS THERE A START SIGNAL?

YES

ALL COUNTERS COUNT START
SIGNAL (+1)

MAKE A/D CONVERSION OF
WEIGHTS INDICATED BY 10
SELECTED WEIGHING MACHINES
AND STORE CONVERTED VALUES

COMPUTE COMBINATIONS AND
STORE COMBINATIONS AND
COMBINATION WEIGHTS

RETRIEVE A COMBINATION
WHICH IS EQUAL OR NEAREST
TO SET VALUE

SEND DISCHARGE SIGNAL

CLEAR COUNTERS ASSOCIATED
WITH WEIGHING MACHINES
WHICH HAVE DISCHARGED

A

Fig .6

3